# FASCICULE DE BREVET EUROPEEN

(11) **EP 1 019 643 B1**
(45) Date de publication et mention de la délivrance du brevet: **08.01.2003**
(21) Numéro de dépôt: 98946551.3
(22) Date de dépôt: 02.10.1998
(51) Int. Cl.: F16F 15/32, F16F 15/34, B60C 13/00, B60C 19/00

(54) **DISPOSITIF D'EQUILIBRAGE POUR ROUE ET ROUE EQUIPEE D'UN TEL DISPOSITIF D'EQUILIBRAGE**
AUSWUCHTUNGSVORRICHTUNG FÜR RÄDER UND RAD BESTÜCKT MIT SOLCH EINER AUSWUCHTUNGSVORRICHTUNG
WHEEL-BALANCING DEVICE AND WHEEL EQUIPPED WITH SAME

(30) Priorité: 03.10.1997 FR 9712528
(43) Date de publication de la demande: 19.07.2000
(73) Titulaire: Fonderie de Gentilly, 91130 Ris-Orangis (FR)
(72) Inventeur: DE CAGNY, Raymond, F-91370 Verrières-le-Buisson (FR); LE MOAL, Gilles, F-78000 Versailles (FR); DELEVOYE, Jacques, F-94230 Cachan (FR)
(74) Mandataire: Quantin, Bruno Marie Henri
(86) Numéro de dépôt international: FR9802112
(87) Numéro de publication internationale: WO99018363

(56) Documents cités:
- WO-A-87/07376
- FR-A- 1 151 191
- US-A- 1 692 145
- US-A- 2 245 355
- US-A- 3 786 850
- US-A- 4 068 898

## Description

La présente invention concerne l'équilibrage de roues de véhicules munies de pneumatiques.

Lorsqu'il arrive que, pour un motif quelconque, la roue d'un véhicule se trouve déséquilibrée, le moyen le plus connu pour remédier à ce défaut est de placer sur la jante, en des emplacements judicieusement choisis, des plombs dont le poids et la position rétablissent l'équilibre défaillant. Cette technique a notamment l'inconvénient que les ressorts, qui assurent la solidarité entre chaque plomb et la jante, provoquent lors de leur mise en place des griffures locales permanentes sur la jante, de sorte que, lorsqu'à l'occasion d'un nouvel équilibrage, il convient de remplacer les plombs, des marques laissées par ces ressorts restent apparentes, ce qui donne un aspect inesthétique à la jante. Il faut noter que ce principe n'est pas possible sur tous les types de jantes ; en effet les plombs d'équilibrage sont en pratique disposés sur des bords périphériques de la jante qui assurent une excellente retenue de ces plombs via-à-vis de la force centrifuge, ce qui fait que les plombs classiques d'équilibrage ne peuvent pas être montés sur des roues dont les jantes ne sont pas munies de tels bords.

Le document US-1 692 145 concerne l'équilibrage de pneumatiques, en vue notamment d'éviter à équilibrer à nouveau une roue dont on change le pneumatique. Il est proposé de fixer par vulcanisation sur ce pneumatique plusieurs masses distribuées angulairement; ces masses sont en plusieurs portions accessibles par des perforations, ce qui permet d'adapter chaque masse aux besoins, par modification du nombre de portions ; les perforations sont ensuite obturées par vulcanisation. Ainsi, ce document prévoit la présence sur le pneumatique de plusieurs masses de structure complexe, dans le seul but d'équilibrer ce pneumatique. Il reste nécessaire de monter sur la jante des poids pour équilibrer la roue dans son ensemble.

Le document FR-1.151.191 propose un principe d'équilibrage capable d'être mis en oeuvre dans le cas précité de jantes sans bords. Celui-ci vise à fournir un dispositif pour l'équilibrage de roues de véhicules, qui soit d'une pose facile, qui puisse en être facilement enlevé, et qui soit néanmoins solidarisé d'une manière sûre, sans séparation malgré les efforts relativement élevés auxquels le dispositif peut être soumis. Il y est proposé de ceinturer la masse d'équilibrage par une bande fixée sur la jante de la roue. Il est indiqué que la ceinture est avantageusement solidaire de la masse ; elle est fixée de préférence par des points de soudure entre des pattes de la ceinture et la jante et il est précisé que cela permet au dispositif d'être posé et déposé plusieurs fois puisque les points de soudure peuvent être rompus à l'aide d'un burin ou analogue. Il est clair que cette solution a les inconvénients indiqués à propos des ressorts de fixation puisque les opérations de soudure puis la séparation par burin laissent inévitablement des traces inesthétiques. En outre les jantes qui ne comportent pas de bords ne sont généralement pas réalisées en des matériaux soudables (jantes d'aluminium, par exemple).

Plus récemment il a été proposé d'équilibrer des roues en assujettissant les plombs sur la jante grâce à une couche adhésive dont ils sont munis. Mais, l'adhérence des plombs se révèle non fiable à l'usage, notamment à l'occasion d'un lavage des roues sous une pression violente. De plus, le caractère inesthétique est toujours présent, surtout pour les jantes aluminium (masses visibles ou morceaux d'adhésifs restant collés sur la jante).

Le document US-A-3,786,850 décrit quant à lui un principe d'équilibrage visant à combiner l'équilibrage et l'individualisation d'une roue. Il y est proposé de remplacer les masses classiques d'équilibrage en plomb par des masses très visibles auxquelles on donne des formes caractéristiques (lettres, chiffres, symboles, etc...) et que l'on colle sur le pneumatique en sorte de former des dessins attractifs et caractéristiques ; les masses sont de préférence réalisées en caoutchouc, par exemple chargé en particules réfléchissantes ou en particules métalliques décoratives pour le rendre le plus visible possible. Il n'est pas envisageable que les masses d'équilibrage puissent être enlevées puisque l'un des buts des masses visibles d'équilibrage est de décourager le vol (ce but n'est atteint que si toute tentative de supprimer les caractères distinctifs laisse des traces visibles rédhibitoires). En fait le choix du caoutchouc pour réaliser les masses d'équilibrage confère à chaque masse un poids modéré par rapport à celui d'une masse d'équilibrage en plomb, ce qui a pour conséquence que les efforts d'origine centrifuge appliqués à chaque masse sont bien plus faibles qu'avec des masses en plomb. La contrepartie est qu'il faut en pratique de nombreuses masses d'équilibrage pour équilibrer une roue (il est même envisagé de dépasser la masse totale d'équilibrage nécessaire, et d'ajouter, à l'opposé de l'axe de la roue, des caractères additionnels compensant le poids excédentaire) ; il faut sans doute beaucoup de temps pour mettre correctement en place toutes les masses d'équilibrage nécessaires. Ce document est donc tout à fait incompatible avec tout souci d'équilibrer rapidement une roue, ou de réaliser cet équilibrage de façon discrète.

L'invention a pour objet un dispositif d'équilibrage permettant de réaliser de façon rapide et aisée l'équilibrage d'une roue, quelles que soient les caractéristiques de la jante, qui soit avantageusement adapté à résister à des efforts mécaniques importants (aux effets centrifuges apparaissant lors d'une conduite à haute vitesse aussi bien qu'aux efforts générés lors, par exemple, du frottement contre un trottoir), dont la présence puisse être très discrète et dont l'élimination lors d'un nouvel équilibrage laisse des traces à peine visibles.

L'invention propose une roue selon les caractéristiques de la revendication 1.

Elle propose de même un dispositif d'équilibrage selon les caractéristiques de la revendication 13 une roue selon les caractéristiques de la revendication 1.

On comprend aisément que, puisque le poids d'équilibrage est fixé par son enveloppe au pneumatique d'une roue, la mise en oeuvre du dispositif d'équilibrage ne dépend pas des caractéristiques de la jante. En outre, on peut utiliser un matériau pour le poids d'équilibrage d'une quelconque densité choisie, par exemple du plomb comme dans la procédure d'équilibrage précitée, sans avoir à se préoccuper de sa liaison à la roue ; le nombre de dispositifs d'équilibrage à mettre en place lors de l'équilibrage d'une roue est donc aussi faible qu'avec des poids classiques en plomb. La liaison du dispositif d'équilibrage à la roue est assurée par l'enveloppe dont le matériau peut être choisi pour ses qualités de liaison au matériau du pneumatique, sans avoir à se préoccuper de sa densité ; il est ainsi possible de choisir pour l'enveloppe un matériau facile à solidariser au pneumatique, ce qui garantit que la fixation résistera à des contraintes importantes. La condition de choisir pour l'enveloppe un matériau ayant sensiblement la même couleur que le pneumatique ne pose à cet égard aucun problème (il suffit de choisir pour l'enveloppe un matériau sensiblement identique à celui d'un pneumatique). Il n'est pas nécessaire que le couple formé par le matériau choisi pour constituer le poids d'équilibrage et le matériau choisi pour l'enveloppe soient capables d'une bonne solidarisation physique l'un à l'autre puisque le poids est enfermé dans l'enveloppe et que la retenue du poids dans l'enveloppe peut éventuellement être obtenue sans liaison par collage ou soudure entre ces deux matériaux. En effet puisque le poids est caché on peut lui donner des géométries particulières permettant un bon ancrage physique (par géométrie) de l'enveloppe, avec par exemple des cavités, gorges, nervures, passages traversant, etc... dans lesquels pénètre le matériau de l'enveloppe ou au contraire qui peuvent s'ancrer dans l'épaisseur de l'enveloppe. La préparation de la surface de l'enveloppe peut être un encollage, de sorte que le dispositif d'équilibrage est aisément mis en place par mise à l'air de la surface encollée et application contre une zone appropriée du pneumatique (en pratique un flanc). Lors d'un équilibrage ultérieur, s'il faut changer l'emplacement des dispositifs d'équilibrage, il suffit de supprimer les dispositifs existants, en coupant l'enveloppe entre le poids d'équilibrage et la partie de l'enveloppe collée contre le pneumatique ; puisque l'enveloppe est en un matériau de couleur similaire à celle du pneumatique la partie résiduelle de l'enveloppe reste très peu apparente.

Selon des caractéristiques préférées de l'invention, éventuellement combinées :
- le poids est en plomb ou en alliage de plomb, ou en variante en un alliage de fer, ou en variante en un alliage de zinc et d'aluminium, voire en matière plastique.
- ladite surface comporte une portion convexe, ou en variante concave, ou en variante est au moins approximativement une portion de cylindre.
- le poids a une section sensiblement rectangulaire.
- l'enveloppe a une épaisseur sensiblement constante.
- l'enveloppe est en une matière souple (en variante elle est rigide), de préférence à base de caoutchouc.
- l'enveloppe comporte des portions occupant des passages traversant le poids.
- l'enveloppe est collée sur la surface du poids.
- la surface est délimitée par des bords définissant des arêtes.
- ladite surface est préencollée.
- ladite surface est munie d'un ruban dont les faces sont revêtues d'adhésif.
- l'enveloppe est noire, ou en variante blanche, ou en variante verte.

Selon des caractéristiques préférées de la roue selon l'invention, éventuellement combinées :
- le dispositif d'équilibrage est disposé le long d'un flanc du pneumatique, à proximité de la jante.
- le dispositif est disposé radialement entre la jante et une portion de largeur maximale du pneumatique.
- le dispositif d'équilibrage longe radialement intérieurement un épaulement du pneumatique.
- le dispositif d'équilibrage longe radialement extérieurement un épaulement du pneumatique.
- le dispositif d'équilibrage est engagé dans une gorge circonférentielle ménagée dans le pneumatique.
- le dispositif d'équilibrage est engagé dans une gorge circonférentielle ménagée par le pneumatique et un rebord de la jante.

Des objets, caractéristiques et avantages de l'invention ressortent de la description qui suit, donnée à titre d'exemple illustratif non limitatif en regard des dessins annexés sur lesquels :
- la figure 1 est une vue en élévation d'une roue conforme à l'invention,
- la figure 2 en est une vue en coupe transversale de la partie haute de cette roue,
- la figure 3 est une vue en coupe transversale de la partie haute d'un autre exemple de réalisation d'une roue conforme à l'invention,
- la figure 4 est une vue en élévation de cette partie haute,
- la figure 5 est une vue en coupe transversale de la partie haute d'encore un autre exemple de réalisation de roue conforme à l'invention,
- la figure 6 est une vue en élévation de cette partie haute,
- la figure 7 est une vue en coupe transversale de la partie haute d'un quatrième exemple de réalisation de roue conforme à l'invention,
- la figure 8 est une vue en élévation de cette partie haute,
- la figure 9 est une vue en coupe transversale de la partie haute d'un cinquième exemple de réalisation de roue conforme à l'invention,
- la figure 10 est une vue en élévation de cette partie haute,
- la figure 11 est une vue en coupe longitudinale d'un premier dispositif d'équilibrage selon l'invention,
- la figure 12 en est une vue en coupe transversale,
- la figure 13 est une vue en coupe longitudinale d'un second dispositif d'équilibrage selon l'invention,
- la figure 14 en est une vue en coupe transversale,
- la figure 15 est une vue en coupe longitudinale d'un troisième dispositif d'équilibrage selon l'invention,
- la figure 16 en est une vue en coupe transversale,
- la figure 17 est une vue en coupe longitudinale d'un quatrième dispositif d'équilibrage selon l'invention,
- la figure 18 en est une vue en coupe transversale,
- la figure 19 est une vue en coupe longitudinale d'un cinquième dispositif d'équilibrage selon l'invention,
- la figure 20 en est une vue en coupe transversale,
- la figure 21 est une vue schématique en perspective d'un dispositif d'équilibrage en train d'être encollé,
- la figure 22 en est une vue de bout,
- la figure 23 est une vue schématique en perspective d'un second dispositif d'équilibrage dont une face a été préencollée,
- la figure 24 en est une vue de bout,
- la figure 25 est une vue schématique en perspective d'un troisième dispositif d'équilibrage muni d'un ruban d'adhésif.

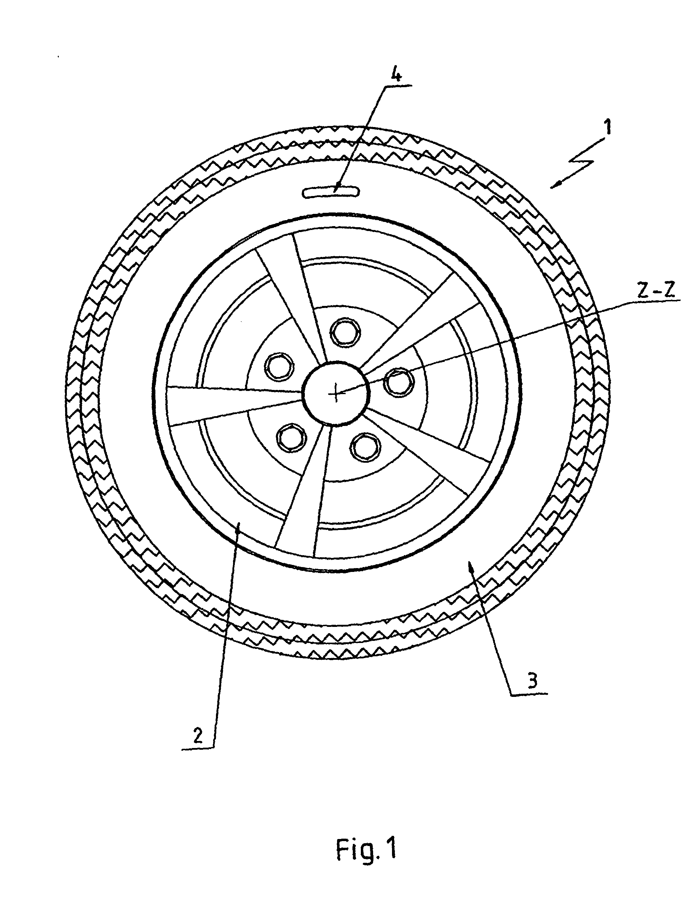

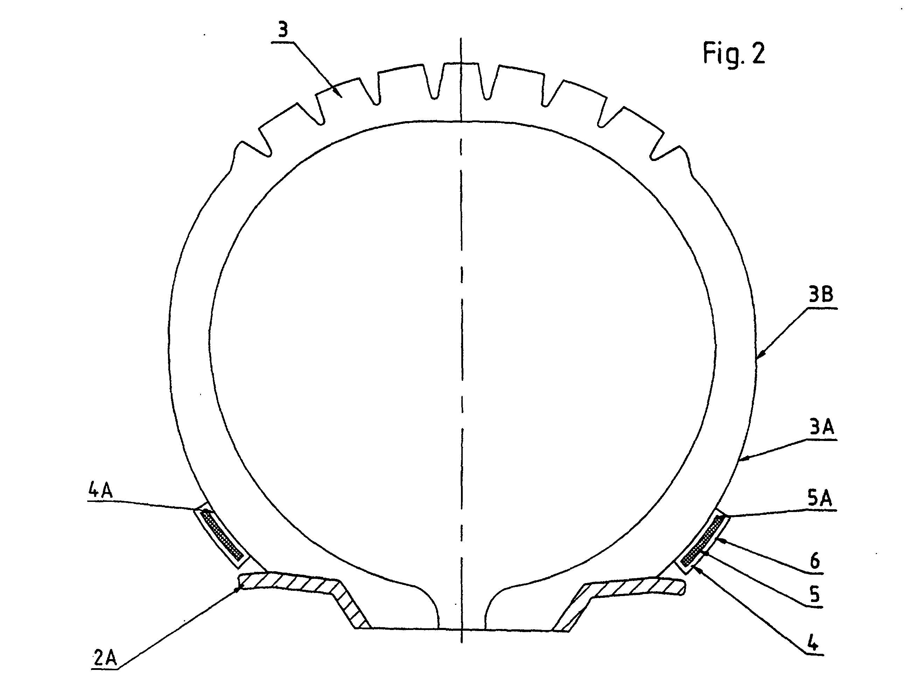

Les figures 1 et 2 représentent une roue 1 comportant une jante 2 adaptée à tourner autour d'un axe de rotation Z-Z et un pneumatique 3engagé autour de cette jante. Ce pneumatique est de tout type adapté à équiper une roue de véhicule. Ce pneumatique est muni sur chacun de ses flancs 3A d'un dispositif d'équilibrage 4. Il peut bien sûr n'y avoir qu'un seul dispositif d'équilibrage, sur un seul flanc.

Ce dispositif 4 est ici à distance du rebord 2A de la jante sur lequel sont classiquement fixés les poids d'équilibrage ; il est toutefois de préférence disposé radialement entre cette jante et la partie 3B du pneumatique qui a une largeur maximale. Cela a notamment pour avantage de garder le dispositif d'équilibrage à proximité de la jante et de garantir que les efforts centrifuge en service seront en partie repris par cette partie renflée 3B du pneumatique.

Ce dispositif d'équilibrage 4 comporte essentiellement un poids d'équilibrage 5 et une enveloppe 6 dans laquelle le poids est enfermé et dont le matériau constitutif a une couleur sensiblement identique à celle du matériau constitutif du pneumatique.

Ce poids d'équilibrage 5 peut être un plomb classique, tel qu'il est fabriqué actuellement mais sans son ressort de fixation. Quant à l'enveloppe 6, elle peut être obtenue par moulage autour du poids d'équilibrage ; elle est de préférence réalisée en un matériau identique ou similaire à celui dont le pneumatique de la roue est lui-même constitué, ce qui est favorable à une bonne solidarisation réciproque entre pneumatique et enveloppe ; puisque ce matériau a sensiblement la même couleur que le pneumatique, la présence du poids, enfermé dans son enveloppe est à peine visible. Ce petit bloc 4 est fixé par au moins une de ses faces, traitée à cet effet, au flanc du pneumatique, par exemple par collage. Lorsqu'un équilibrage s'est révélé nécessaire, l'opérateur s'est muni du bloc susdécrit (après qu'il en ai identifié la caractéristique de poids, selon les procédures habituelles d'équilibrage), et l'a appliqué énergiquement à l'endroit désiré, directement sur le flanc du pneumatique, presque au niveau de la jante.

Le bloc 4 remplit ainsi son office d'équilibrage, en demeurant peu visible et en laissant le pneumatique et la jante intacts en cas de dépose.

En effet, si un nouvel équilibrage devient un jour nécessaire, l'opérateur, à l'aide d'un instrument tranchant, découpe la partie externe de l'enveloppe concernée, libérant ainsi cette partie en même temps que le plomb qu'elle refermait, ne laissant sur le pneumatique que la partie interne du bloc (une simple face), qui demeure collée au pneumatique avec lequel elle se confond, étant de même nature et de même couleur. Le retrait du plomb n'implique plus, cette fois, de caractère inesthétique comme avec les poids d'équilibrage fixés sur la jante.

La pose sur toute roue d'un véhicule quelconque des plombs nécessaires à son équilibrage est donc simple et fiable (le choix possible du matériau de l'enveloppe indépendamment de celui du poids d'équilibrage rend facile de pouvoir assurer une très bonne liaison mécanique entre l'enveloppe et le pneumatique).

Le matériau constitutif du poids 5 est de préférence du plomb classique (plomb ou alliage de plomb) mais peut aussi être une autre matière telle qu'acier, fonte, alliage de zinc et d'aluminium de type zamak, alliage ferreux ou non ferreux, voire même plastique (exemple polypropylène...).

L'enveloppe a une épaisseur qui est de préférence sensiblement constante (par exemple de l'ordre d'un millimètre) de sorte que la forme du poids détermine sensiblement celle du dispositif d'équilibrage.

La géométrie des poids 5 peut être celle des poids actuels.

Pour une bonne adéquation du bloc 4 sur le pneumatique, celui-ci peut:
. être globalement en arc de cercle pour suivre la forme arrondie du rebord de la jante (figure 1) ; et/ou
. avoir une face 4A concave, destinée à longer le pneumatique, de manière à suivre la forme arrondie du flanc de pneumatique (figure 2).

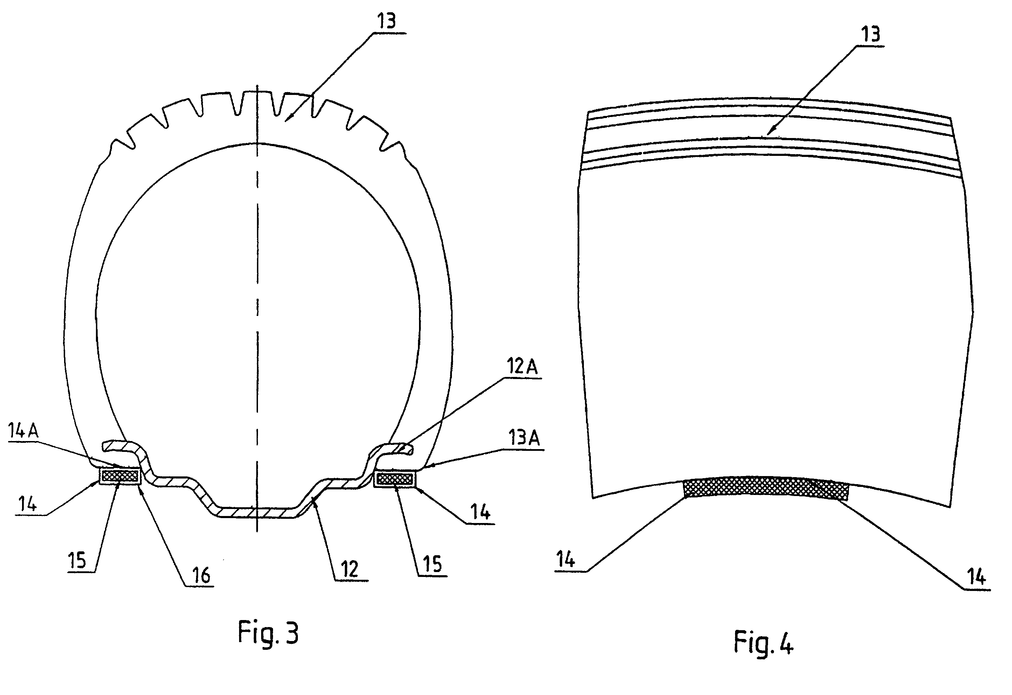

Dans l'exemple des figures 3 et 4 le dispositif d'équilibrage repéré 14 longe intérieurement un rebord 13A du pneumatique 13, disposé radialement à l'intérieur du rebord 12A de la jante 12 ; dans ce cas le poids 15 a avantageusement une face convexe parallèle à une surface convexe 14A du bloc longeant le pneumatique, tandis que la face opposée (figure 4) peut être droite (en fait, la géométrie de cette face opposée importe peu). Il y a ici deux dispositifs d'équilibrage, disposés sur les deux rebords internes du pneumatique.

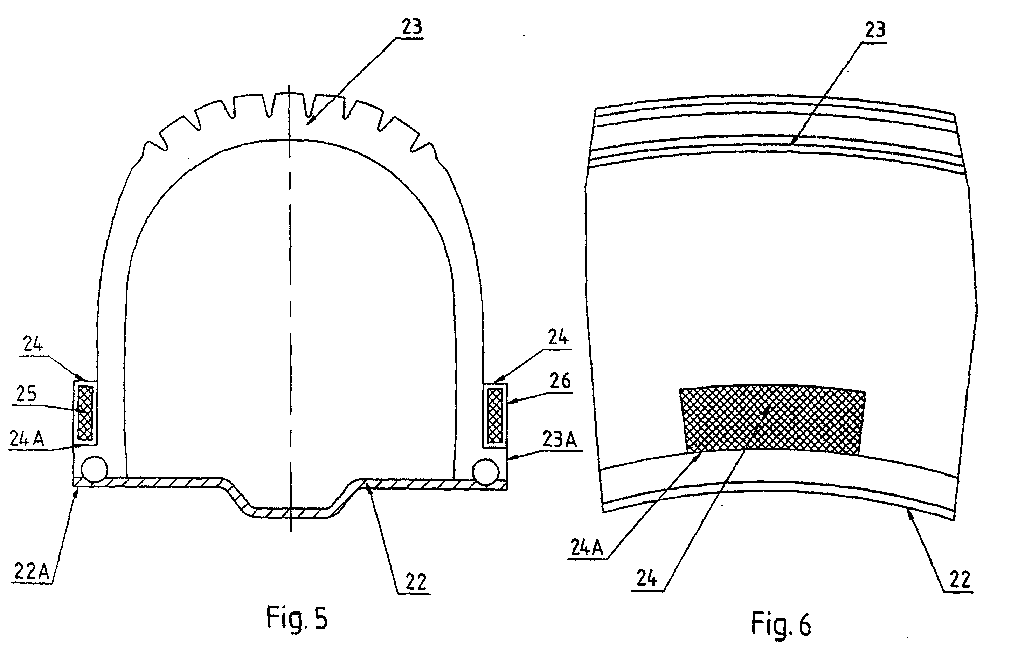

Dans l'exemple des figures 5 et 6, où chaque dispositif d'équilibrage 24 est disposé radialement à l'extérieur d'un épaulement 23A du pneumatique 23, radialement à l'extérieur du rebord 22A de la jante 22, le poids 25 a avantageusement une surface concave parallèle à une surface concave 24A du bloc destinée à suivre la forme convexe de l'épaulement du pneumatique ; la géométrie de la face opposée du poids (à la figure 6) peut être quelconque, par exemple convexe ou plane, notamment. Il y a ici aussi deux dispositifs d'équilibrage des deux côtés du plan de la roue.

Dans les exemple précités, l'implantation du dispositif d'équilibrage est faite dans une zone disponible du pneumatique, sans que celui-ci ait été nécessairement conçu pour recevoir des dispositifs d'équilibrage selon l'invention.

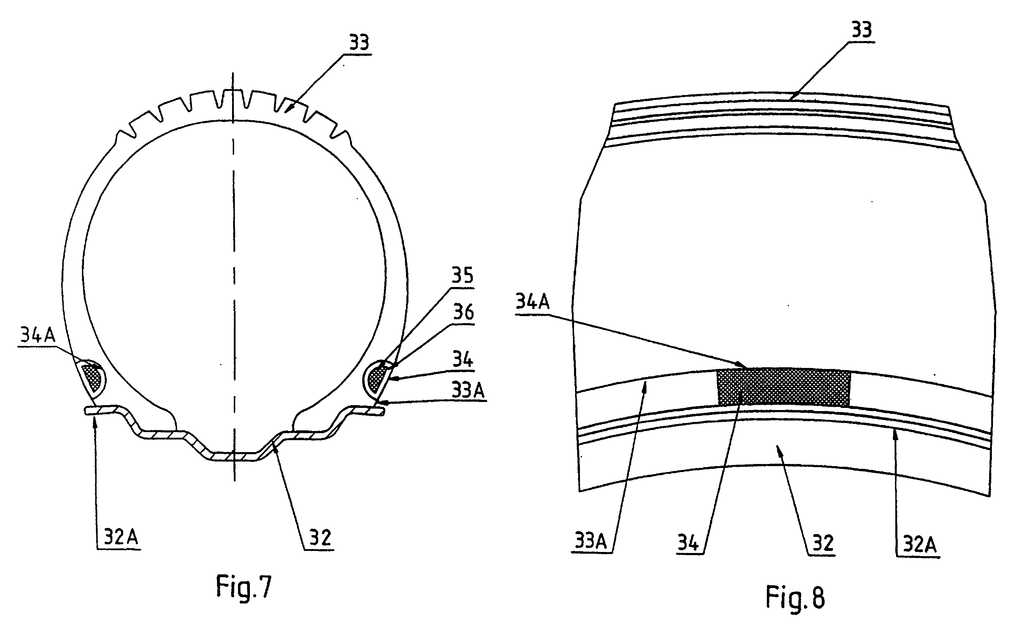

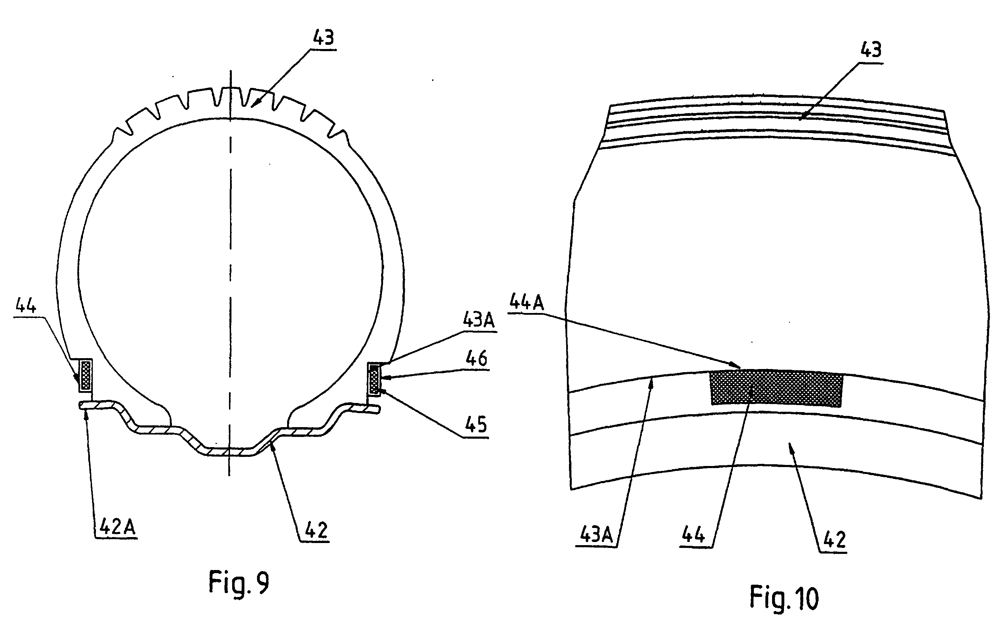

Dans les figures 7 à 10, le dispositif d'équilibrage 34 (aux figures 7 et 8) ou 44 (aux figures 9 et 10) est engagé dans un dégagement 33A ou 43A du pneumatique 33 ou 43 prévu à cet effet, ici radialement à l'extérieur du rebord libre 32A ou 42A de la jante 32 ou 42. Aux figures 7 et 8 le dispositif 34 est une portion de bourrelet engagée en tout ou partie dans une gorge circonférentielle 33A du pneumatique 33 et l'enveloppe entourant le poids d'équilibrage 35 est une pièce arquée (figure 8) qui a au moins une face 34A fortement courbée (figure 7),au moins approximativement en portion de cylindre (ici sensiblement un demi-cylindre) destinée à suivre la surface interne de la gorge 33A. Aux figures 9 et 10 le dispositif 44 est une pièce arquée reçue dans un dégagement 43A du pneumatique 43 définissant une gorge avec le rebord 42A de la jante ; le dispositif d'équilibrage 44 n'occupe pas toute la section de cette gorge, restant à distance de ce rebord 42A. L'enveloppe 46 entourant le poids 45 a une forme arquée avec une face 44A convexe destinée à longer intérieurement l'épaulement que présente le pneumatique à l'opposé du rebord 42A (comme dans le cas des figures 3 et 4 la tranche radialement interne du poids peut être quelconque, concave ou plane, notamment. Comme précédemment, un dispositif d'équilibrage peut être prévu du côté interne et/ou externe de la roue, selon l'endroit où le pneumatique a été aménagé à cet effet.

L'enveloppe de chacun des dispositifs d'équilibrage précités peut être réalisée en des matériaux divers, en pratique du type matière plastique ou polymère ou en un matériau caoutchouteux ; il s'agit par exemple d'un matériau du type EPDM, mais il peut aussi s'agir de PVC. Cette enveloppe peut être souple ou rigide, selon le matériau choisi. Cette enveloppe est réalisée autour du poids, par exemple par surmoulage. La réalisation de l'enveloppe tout autour du poids a pour résultat que le poids est rendu solidaire de l'enveloppe caoutchouc en sorte de former un bloc.

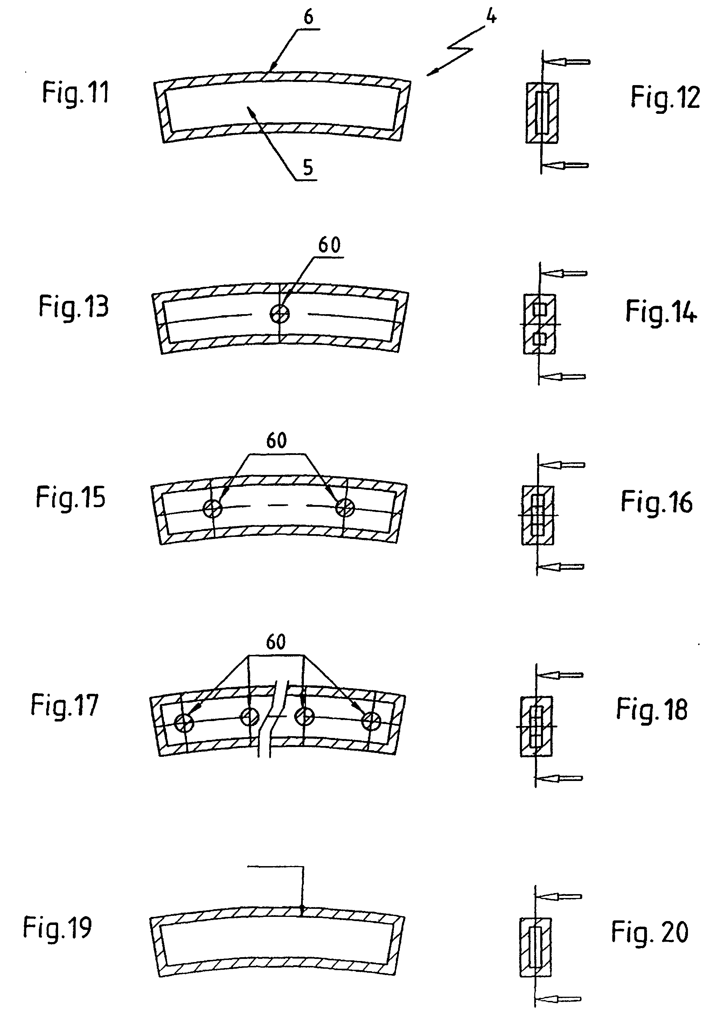

La cohésion de ce bloc peut être suffisamment assurée par la résistance mécanique de l'enveloppe qui confine le poids (figures 11 et 12), mais elle est bien évidemment améliorée par l'éventuelle adhérence obtenue entre le poids et le matériau de l'enveloppe le long de leurs interfaces, lors de la fabrication elle-même par exemple par surmoulage.

On peut renforcer la cohésion de ce bloc soit :
. par retenue ou ancrage mécanique de l'enveloppe au travers du poids, avec 1 passage 60 (figures 13 et 14), 2 passages 60 (figures 15 et 16), voire plusieurs passages 60 (figures 17 et 18) au travers du poids ; ou
. par interposition d'un produit de collage 70 entre poids et enveloppe (figures 19 et 20) pour obtenir une bonne adhérence sur toute la surface de contact.

La couleur du matériau constitutif de l'enveloppe est choisie identique à celle du pneumatique (noire, blanche, verte...) afin de rendre le bloc quasiment pas visible une fois celui-ci installé sur le pneumatique ; il faut noter que l'homme de métier sait, sans difficulté colorer les matériaux plastiques ou caoutchouteux qui peuvent être utilisés pour l'enveloppe.

En pratique, comme avec les poids d'équilibrage connus, la forme et les dimensions transversales (dans un plan de la roue) peuvent être données et les différences de poids sont obtenues par des différences d'épaisseur (parallèlement à l'axe de rotation). En variante, on peut procéder inversement, en faisant varier la dimension circonférentielle, voire même en faisant varier plusieurs dimensions.

La procédure d'équilibrage commence par le choix d'un dispositif de poids capable de compenser le balourd constaté sur la roue considérée (des appareils existent à cet effet pour les poids classiques et peuvent aisément être aménagés en fonction de la distance à l'axe à laquelle on prévoit de fixer les dispositifs d'équilibrage sur le pneumatique).

La surface de l'enveloppe qui est destinée à être solidarisée au pneumatique est avantageusement traitée en conséquence. Ce traitement peut simplement avoir consisté à lui donner la géométrie voulue : elle est en pratique de géométrie simple de manière à épouser la forme complémentaire du pneumatique. Pour assurer une solidarisation optimale cette surface est avantageusement bordée par des bords nets définissant des arêtes 80 ; cela évite la formation de fentes entre le bloc et le pneumatique susceptibles de constituer des amorces de fissures pouvant ensuite se propager dans la surface de solidarisation du bloc au pneumatique. En variante, des tranches du bloc peuvent être effilées ou en forme de lèvres afin de suivre le prolongement de la surface du pneumatique (cela est par exemple obtenu en donnant au bloc une section trapézoïdale dont la grande base est destinée à longer la surface du pneumatique).

Une manière d'obtenir une adhésion optimale, est de s'assurer que les surfaces du pneumatique et du bloc sont propres et sèches :
. un grattage préalable des surfaces permet de "réactiver" le caoutchouc ;
. puis elles sont nettoyées avec un solvant, par exemple de l'heptane ; il peut aussi s'agir d'un mélange d'alcool isopropylique et d'eau, etc ...
. la fixation du bloc sur le pneumatique peut être réalisée par de la colle (par exemple du type cyanoacrylate), par exemple celle vendue par LOCTITE sous la référence 406.

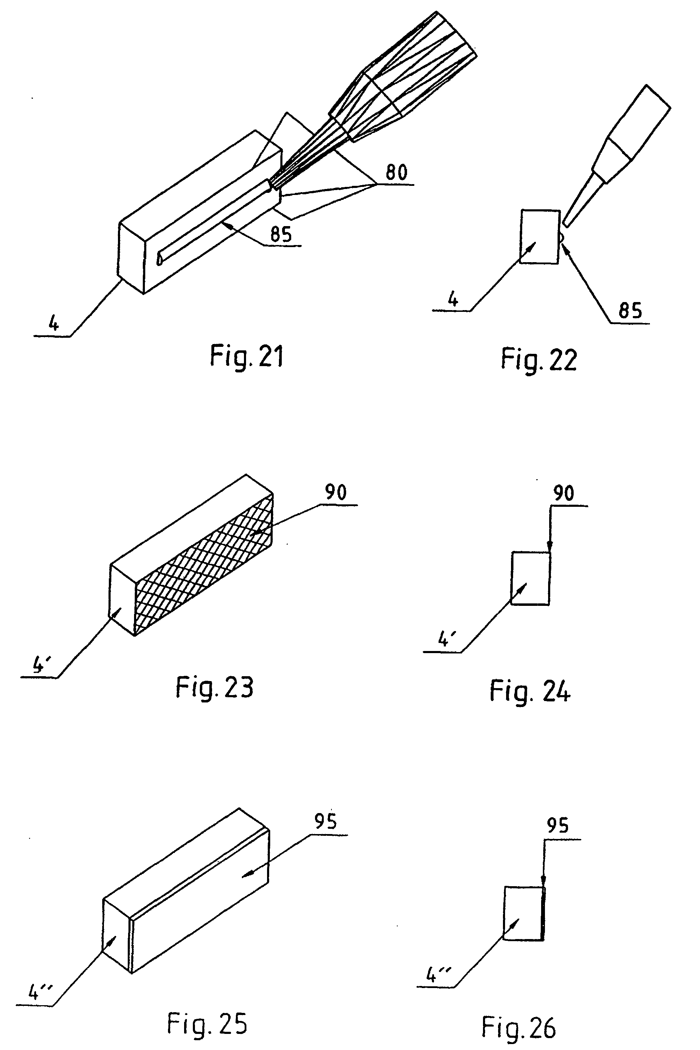

Les figures 21 et 22 montrent un bloc ou dispositif d'équilibrage 4 selon l'invention en train d'être encollé avec de la colle 85 juste avant collage contre la surface correspondante d'un pneumatique. En variante représentée aux figures 23 et 24 le bloc 4' est préencollé lors de sa fabrication et, lorsqu'on souhaite le solidariser à un pneumatique, on dégage un éventuel film de protection pour libérer la couche de colle fortement adhésive 90. Les figures 25 et 26 décrivent une autre variante où l'encollage de la surface de fixation du bloc 4" a consisté à mettre un ruban 95, par exemple revêtu sur ses deux faces d'un adhésif thermoréactivable; après dégagement d'un éventuel film de protection il suffit de réactiver l'adhésif.

En variante, le couche d'adhésif 90 ou le ruban 95 peuvent être mis en place au dernier moment.

Le bloc ainsi encollé (selon l'une quelconque des variantes présentées à propos des figures 21 à 26) est positionné ensuite sur le pneumatique à l'endroit désiré, avec une mise en pression de quelques secondes. La procédure d'équilibrage est alors terminée.

D'autres solutions de solidarisation peuvent être envisagées, avec par exemple une vulcanisation locale.

En règle générale, dans les exemples représentés, le poids et donc le bloc d'équilibrage ont une forme globalement parallélépipédique éventuellement arquée, sauf dans le cas des figures 7 et 8. La solidarisation au pneumatique peut se faire, selon les cas, sur une seule face (figures 2 à 4), sur deux faces (figures 5, 6, 9 et 10) ou une surface à forte courbure dans un plan contenant l'axe de rotation (figures 7 et 8), pouvant être une surface semi-cylindrique (éventuellement arquée pour suivre la circonférence du pneumatique).

Lorsqu'un nouvel équilibrage est nécessaire (en supposant que le pneumatique soit conservé) :
. soit on laisse le bloc précédent s'il ne gêne pas la pose d'un nouveau bloc ;
. soit on le découpe délicatement au niveau de la face collée.

Les dispositifs d'équilibrage selon l'invention conviennent parfaitement aux pneumatiques existants et peuvent sans difficulté s'adapter aux pneumatiques actuellement en cours de développement et qui font l'objet de nouveaux modes de fixation sur la jante (exemple : pneumatique à accrochage vertical).

## Revendications

1. Roue comportant une jante (2, 12, 22, 32, 42) ayant un axe (Z-Z), un pneumatique (3, 12, 23, 33, 43) et des moyens d'équilibrage, **caractérisée en ce que** ces moyens sont constitués d'un ou plusieurs dispositif d'équilibrage (4, 14, 24, 34, 44) de la roue comportant un poids d'équilibrage (5, 15, 25, 35, 45) enfermé dans une enveloppe (6, 16, 26, 36, 46) dont une surface (4A, 14A, 24A, 34A, 44A) est solidarisée à une surface (3A, 13A, 23A, 33A, 43A) d'un flanc du pneumatique et qui est réalisée en un matériau ayant une couleur similaire à celle de ce pneumatique.

2. Roue selon la revendication 1, **caractérisée en ce qu'**elle comporte au plus un dispositif d'équilibrage par flanc.

3. Roue selon la revendication 1 ou la revendication 2, **caractérisée en ce que** le dispositif d'équilibrage (4) est disposé le long d'un flanc du pneumatique, à proximité de la jante.

4. Roue selon l'une quelconque des revendications 1 à 3, **caractérisée en ce que** le dispositif (4) est disposé radialement entre la jante et une portion de largeur maximale (3B) du pneumatique.

5. Roue selon l'une quelconque des revendications 1 à 4, **caractérisée en ce que** le dispositif d'équilibrage (14) longe radialement intérieurement un épaulement (13A) du pneumatique.

6. Roue selon l'une quelconque des revendications 1 à 4, **caractérisée en ce que** le dispositif d'équilibrage (24) longe radialement extérieurement un épaulement du pneumatique.

7. Roue selon l'une quelconque des revendications 1 à 4, **caractérisée en ce que** le dispositif d'équilibrage (34) est engagé dans une gorge circonférentielle (33A) ménagée dans le pneumatique.

8. Roue selon l'une quelconque des revendications 1 à 4, **caractérisée en ce que** le dispositif d'équilibrage (44) est engagé dans une gorge circonférentielle ménagée par le pneumatique et un rebord de la jante.

9. Roue selon l'une quelconque des revendications 1 à 8, **caractérisée en ce que** le dispositif d'équilibrage et solidarisé par collage.

10. Roue selon l'une quelconque des revendications 1 à 9, **caractérisée en ce que** le poids est en un alliage de fer.

11. Roue selon l'une quelconque des revendications 1 à 9, **caractérisée en ce que** le poids est un alliage de zinc et d'aluminium.

12. Roue selon l'une quelconque des revendications 1 à 9, **caractérisée en ce que** le poids est en matière plastique.

13. Dispositif d'équilibrage (4, 4', 4", 14, 24, 34, 44) pour roue adapté à être intégré à une roue selon l'une quelconque des revendications 1 à 12, **caractérisé en ce qu'**il comporte un poids d'équilibrage de section sensiblement rectangulaire (5, 15, 25, 35, 45) enfermé dans une enveloppe en matière souple d'épaisseur sensiblement constante (6, 16, 26, 36, 46) dont une surface est adaptée à être solidarisée à un pneumatique et qui est réalisée en un matériau ayant une couleur similaire à celle d'un pneumatique.

14. Dispositif selon la revendication 13, **caractérisé en ce que** le poids est en plomb ou en alliage de plomb.

15. Dispositif selon la revendication 13, **caractérisé en ce que** le poids est en un alliage de fer.

16. Dispositif selon la revendication 13, **caractérisé en ce que** le poids est en un alliage de zinc et d'aluminium.

17. Dispositif selon la revendication 13, **caractérisé en ce que** le poids est en matière plastique.

18. Dispositif selon l'une quelconque des revendications 13 à 17, **caractérisé en ce que** ladite surface (14A, 44A) comporte une portion convexe.

19. Dispositif selon l'une quelconque des revendications 13 à 17, caractérisé en ce ladite surface (4A, 24A) comporte une portion concave.

20. Dispositif selon l'une quelconque des revendications 13 à 17, **caractérisé en ce que** la surface (34A) est au moins approximativement une portion de cylindre.

21. Dispositif selon l'une quelconque des revendications 13 à 20, **caractérisé en ce que** l'enveloppe comporte des portions occupant des passages (60) traversant le poids.

22. Dispositif selon l'une quelconque des revendications 13 à 21, **caractérisé en ce que** l'enveloppe est collée (70) sur la surface du poids.

23. Dispositif selon l'une quelconque des revendications 13 à 22, **caractérisé en ce que** la surface est délimitée par des bords définissant des arêtes (80).

24. Dispositif selon l'une quelconque des revendications 13 à 23, **caractérisé en ce que** ladite surface est préencollée (90).

25. Dispositif selon l'une quelconque des revendications 13 à 23, **caractérisé en ce que** ladite surface est munie d'un ruban (95) dont les faces sont revêtues d'adhésif.

26. Dispositif selon l'une quelconque des revendications 13 à 25, **caractérisé en ce que** l'enveloppe est noire.

27. Dispositif selon l'une quelconque des revendications 13 à 25, **caractérisé en ce que** l'enveloppe est blanche.

28. Dispositif selon l'une quelconque des revendications 13 à 25, **caractérisé en ce que** l'enveloppe est verte.

## Patentansprüche

1. Rad mit einer Felge (2, 12, 22, 32, 42) mit Achse (Z-Z), einem Reifen (3, 12, 23, 33, 43) und Ausgleichsmitteln, **dadurch gekennzeichnet, dass** die Mittel aus einer oder mehreren Ausgleichsvorrichtung(en) (4, 14, 24, 34, 44) für den Reifen gebildet sind, welche ein Ausgleichsgewicht (5, 15, 25, 35, 45) aufweisen, das in einer Umhüllung (6, 16, 26, 36, 46) eingeschlossen ist, von der eine Fläche (4A, 14A, 24A, 34A, 44A) an einer Oberfläche (3A, 13A, 23A, 33A, 43A) eines Flankens des Reifens befestigt und aus einem Material gefertigt ist, dessen Farbe der des Reifens entspricht.

2. Rad nach Anspruch 1, **dadurch gekennzeichnet, dass** es pro Flanke mindestens eine Ausgleichsvorrichtung aufweist.

3. Rad nach Anspruch 1 oder 2, **dadurch gekennzeichnet, dass** die Ausgleichsvorrichtung (4) längs einer Flanke des Reifens nahe der Felge angeordnet ist.

4. Rad nach einem der Ansprüche 1 bis 3, **dadurch gekennzeichnet, dass** die Vorrichtung (4) in radialer Richtung gesehen zwischen der Felge und einem Abschnitt maximaler Breite (3B) des Reifens angeordnet ist.

5. Rad nach einem der Ansprüche 1 bis 4, **dadurch gekennzeichnet, dass** sich die Ausgleichsvorrichtung (14) in radialer Richtung gesehen innerhalb einer Schulter (13A) des Reifens erstreckt.

6. Rad nach einem der Ansprüche 1 bis 4, **dadurch gekennzeichnet, dass** sich die Ausgleichsvorrichtung (24) in radialer Richtung gesehen außerhalb der Schulter des Reifens erstreckt.

7. Rad nach einem der Ansprüche 1 bis 4, **dadurch gekennzeichnet, dass** die Ausgleichsvorrichtung (34) in eine am Reifen ausgesparte, umlaufende Nut (33A) eingebunden ist.

8. Rad nach einem der Ansprüche 1 bis 4, **dadurch gekennzeichnet, dass** die Ausgleichsvorrichtung (44) in eine zwischen dem Reifen und einem Felgenhorn der Felge ausgesparte, umlaufende Nut eingebunden ist.

9. Rad nach einem der Ansprüche 1 bis 8, **dadurch gekennzeichnet, dass** die Ausgleichsvorrichtung durch Kleben fest verbunden ist.

10. Rad nach einem der Ansprüche 1 bis 9, **dadurch gekennzeichnet, dass** das Gewicht aus einer Eisenlegierung ist.

11. Rad nach einem der Ansprüche 1 bis 9, **dadurch gekennzeichnet, dass** das Gewicht aus einer Legierung aus Zink und Aluminium ist.

12. Rad nach einem der Ansprüche 1 bis 9, **dadurch gekennzeichnet, dass** das Gewicht aus einem Kunststoffmaterial ist.

13. Ausgleichsvorrichtung (4, 4', 4", 14, 24, 34, 44) für ein Rad (1), die an einem Rad nach einem der Ansprüche 1 bis 12 vorzusehen ist, **dadurch gekennzeichnet, dass** sie ein im Querschnitt im wesentlichen rechteckiges Ausgleichsgewicht (5, 15, 25, 35, 45) aufweist, welches in einer Umhüllung aus einem elastischen Material mit im wesentlichen gleichbleibender Dicke (6, 16, 26, 36, 46) eingeschlossen ist, von der eine Fläche mit einem Reifen fest zu verbinden ist und die aus einem Material gefertigt ist, dessen Farbe der des Reifens entspricht.

14. Vorrichtung nach Anspruch 13, **dadurch gekennzeichnet, dass** das Gewicht aus Blei oder aus einer Bleilegierung ist.

15. Vorrichtung nach Anspruch 13, **dadurch gekennzeichnet, dass** das Gewicht aus einer Eisenlegierung ist.

16. Vorrichtung nach Anspruch 13, **dadurch gekennzeichnet, dass** das Gewicht aus einer Legierung aus Zink und Aluminium ist.

17. Vorrichtung nach Anspruch 13, **dadurch gekennzeichnet, dass** das Gewicht aus einem Kunststoffmaterial ist.

18. Vorrichtung nach einem der Ansprüche 13 bis 17, **dadurch gekennzeichnet, dass** die Fläche (14A, 44A) einen konvexen Abschnitt aufweist.

19. Vorrichtung nach einem der Ansprüche 13 bis 17, **dadurch gekennzeichnet, dass** die Fläche (4A, 24A) einen konkaven Abschnitt aufweist.

20. Vorrichtung nach einem der Ansprüche 13 bis 17, **dadurch gekennzeichnet, dass** die Fläche (34A) ein im wesentlichen annähernd zylindrischer Abschnitt ist.

21. Vorrichtung nach einem der Ansprüche 13 bis 20, **dadurch gekennzeichnet, dass** die Umhüllung Abschnitte aufweist, welche Kanäle (60) durch das Gewicht ausfüllen.

22. Vorrichtung nach einem der Ansprüche 13 bis 21, **dadurch gekennzeichnet, dass** die Umhüllung an der Oberfläche des Gewichtes verklebt (70) ist.

23. Vorrichtung nach einem der Ansprüche 13 bis 22, **dadurch gekennzeichnet, dass** die Fläche durch Ränder begrenzt ist, welche Kanten (80) definieren.

24. Vorrichtung nach einem der Ansprüche 13 bis 23, **dadurch gekennzeichnet, dass** die Fläche eingeklebt (90) ist.

25. Vorrichtung nach einem der Ansprüche 13 bis 23, **dadurch gekennzeichnet, dass** die Fläche mit einem Band (95) versehen ist, dessen Oberflächen mit einem Klebstoff beschichtet sind.

26. Vorrichtung nach einem der Ansprüche 13 bis 25, **dadurch gekennzeichnet, dass** die Umhüllung schwarz ist.

27. Vorrichtung nach einem der Ansprüche 13 bis 25, **dadurch gekennzeichnet, dass** die Umhüllung weiß ist.

28. Vorrichtung nach einem der Ansprüche 13 bis 25, **dadurch gekennzeichnet, dass** die Umhüllung grün ist.

## Claims

1. Wheel comprising a rim (2, 12, 22, 32, 42) having an axle (Z-Z), a tyre (3, 12, 23, 33, 43) and balancing means, **characterised in that** these means are constituted by one or more balancing devices (4, 14, 24, 34, 44) of the wheel, including a balancing weight (5, 15, 25, 35, 45) enclosed in a case (6, 16, 26, 36, 46) a surface of which (4A, 14A, 24A, 34A, 44A) is firmly fixed to a surface (3A, 13A, 23A, 33A, 43A) of a side of the tyre and which is made of a material having a similar colour to that of this tyre.

2. Wheel according to claim 1, **characterized in that** it comprises in addition a balancing device per side.

3. Wheel according to claim 1 or claim 2, **characterized in that** the balancing device (4) is arranged along one side of the tyre, close to the rim.

4. Wheel according to any one of claims 1 to 3, **characterized in that** the device (4) is arranged radially between the rim and a section of maximum width (3B) of the tyre.

5. Wheel according to any one of claims 1 to 4, **characterized in that** the balancing device (14) runs radially along the inside of a side wall (13A) of the tyre.

6. Wheel according to any one of claims 1 to 4, **characterized in that** the balancing device (24) runs radially along the outside of a side wall of the tyre.

7. Wheel according to any one of claims 1 to 4, **characterized in that** the balancing device (34) is engaged in a circumferential groove (33A) provided in the tyre.

8. Wheel according to any one of claims 1 to 4, **characterized in that** the balancing device (44) is engaged in a circumferential groove provided by the tyre and an edge of the rim.

9. Wheel according to any one of claims 1 to 8, **characterized in that** the balancing device is firmly fixed by glue.

10. Wheel according to any one of claims 1 to 9, **characterized in that** the weight is made of an iron alloy.

11. Wheel according to any one of claims 1 to 9, **characterized in that** the weight is made of a zinc and aluminium alloy.

12. Wheel according to any one of claims 1 to 9, **characterized in that** the weight is made of plastic material.

13. Balancing device (4, 4', 4", 14, 24, 34, 44) for the wheel, adapted to be integral with a wheel according to any one of claims 1 to 12, **characterized in that** it includes a balancing weight with an approximately rectangular cross section (5, 15, 25, 35, 45) enclosed in a case of flexible material with an approximately constant thickness (6, 16, 26, 36, 46) a surface of which is adapted to be firmly fixed to a tyre and which is made of a material having a similar colour to that of a tyre.

14. Device according to claim 13, **characterized in that** the weight is made of lead or a lead alloy.

15. Device according to claim 13, **characterized in that** the weight is made of an iron alloy.

16. Device according to claim 13, **characterized in that** the weight is made of a zinc and aluminium alloy.

17. Device according to claim 13, **characterized in that** the weight is made of plastic material.

18. Device according to any one of claims 13 to 17, **characterized in that** said surface (14A, 44A) includes a convex section.

19. Device according to any one of claims 13 to 17, **characterized in that** said surface (4A, 24A) includes a concave section.

20. Device according to any one of claims 13 to 17, **characterized in that** the surface (34A) is at least approximately a portion of a cylinder.

21. Device according to any one of claims 13 to 20, **characterized in that** the case includes portions which occupy passages (60) passing through the weight.

22. Device according to any one of claims 13 to 21, **characterized in that** the case is glued (70) onto the surface of the weight.

23. Device according to any one of claims 13 to 22, **characterized in that** the surface is delimited by borders which define edges (80).

24. Device according to any one of claims 13 to 23, **characterized in that** said surface is pre-coated with glue (90).

25. Device according to any one of claims 13 to 23, **characterized in that** said surface is provided with a tape (95) the surfaces of which are coated with adhesive.

26. Device according to any one of claims 13 to 25, **characterized in that** the case is black.

27. Device according to any one of claims 13 to 25, **characterized in that** the case is white.

28. Device according to any one of claims 13 to 25, **characterized in that** the case is green
